# EUROPEAN PATENT APPLICATION

(11) **EP 4 016 922 A1**
(43) Date of publication of application: **22.06.2022**
(21) Application number: 20383110.2
(22) Date of filing: 17.12.2020
(51) Int. Cl.: H04L 9/32, H04W 12/50, G16Y 30/10, G06F 21/71, H04W 12/71

(54) **A METHOD FOR PROVIDING IDENTITY AND AUTHENTICATION TO A DATA-GENERATION DEVICE AND A DATA-GENERATION DEVICE**

(71) Applicant: Telefónica Cybersecurity & Cloud Tech, S.L.U., 28050 Madrid (ES)
(72) Inventor: TORRES VELASCO, José, 28050 Madrid (ES); BIANZINO, Aruna Prem, 28050 Madrid (ES); DE LOS SANTOS VILCHEZ, Sergio, 28050 Madrid (ES)
(74) Representative: Carlos Hernando, Borja

(57) **Abstract**

A method for providing identity and authentication to a data-generation device and a data-generation device are disclosed. The method comprises including a beacon into a data-generation device; storing a unique pattern through a set of capacitive points included on a capacity surface of the beacon; storing a unique identifier code in a portable computing device having a capacitive screen; pairing the data-generation device with the portable computing device by means of reading said unique pattern via the capacitive screen of the portable computing device, providing a user-device pair as a result; associating the user-device pair with a digital certificate; encrypting data generated by the data-generation device using an encryption key specific to the user-device pair, the encryption key being stored in a security module of the beacon; and transmitting, by the beacon, the encrypted data to a server and/or to a distributed ledger.

## Description

### Technical Field

The invention relates to a method for providing identity and authentication to a data-generation device and to a data-generation device.

In this document, by beacon it should be understood a hardware and/or software module/element attached to a data-generating device to grant the device functionalities such as connectivity, identification, security, etc.

### Background of the Invention

Isolated data-generation devices may perform critical operations, such as measurements, access control, resource allocation, etc. These devices may need to be monitored in detail to make sure they report correct measurements, enforce correct policies on access control or resource allocation, are in the correct location, etc. As such, each device needs a robust identity association to guarantee the security of the information exchange, and the authenticity and integrity of the generated information.

Some patents and/or patent applications are known in the field.

For example, KR 101647567-B1 discloses remote measuring devices that are authenticated by a gateway collecting their measurements, on the basis of a specific array of measurements sent from the device itself. The remote devices are built with the solution in mind and cannot be connected later. The measurement data is transmitted in clear (i.e., without encryption). Only the standalone device is authenticated, and not the eventual pair with the specific operator using it. The measuring data may not be offered to external audit.

EP 2417546-B1 describes a solution that allows a user and a device to be authenticated together to a remote service, so that data can be generated from the device assuring it is related to the user. The solution uses a combination of a unique ID for the device and biometric data for the user, where the device ID is used to generate the key used to sign the data that will be sent to the remote server. The data generated by the device is not stored into a distributed ledger or other equivalent solution for immutable record and external auditing. Data transmission from the device is not encrypted. Specific measurements may not be requested by the remote server, like proof of possession, location, etc. Finally, this solution targets devices working only with the presence of a user, like medical devices, not accounting also for independent devices.

US 20170359343-A1 describes a solution to allow a user device to communicate with an loT device, where the user device provides the loT device with login credentials (e.g., a unique identifier) to identify the user. The communication between the loT device and the user device is encrypted and takes place over a wireless network. Unlike present invention, the communication between the loT device and the user device takes place over a network, which is inherently less secure than by contact. Data transmitted by the loT device is not stored in a distributed ledger or equivalent solution to guarantee an immutable record and to allow external auditing.

WO 2017176051-A1 describes a solution to authenticate an loT device through a mobile user-device. The devices are connected through agents, installed on each one of them and communicating through a wireless network. The connection allows hence transmitting later on data to a remote server. In this international patent application nothing is declared concerning the signature and/or encryption of the data transmitted to the server after the authentication of the user and their mobile device. The communication between the loT device and the user device takes place over a network, which is inherently less secure than by contact, as in present invention. Data transmitted by the loT device is not stored in a distributed ledger or equivalent solution to guarantee an immutable record and to allow external auditing.

EP 3295356-A1 allows a device to access resources in another device. The accessing device is requested for credential (input sequence like password, executed through buttons and/or scroll wheels). The communication between devices is signed. The location/proximity of the user may be also used as an authentication factor. The main focus of this solution is on accessing resources on a remote service, while in present invention the main focus is on remotely controlling the device, or for the device to send measurement data. The communication between the loT device and the user device takes place over a network, which is inherently less secure than by contact, as in present patent application. Data transmitted by the loT device is not stored in a distributed ledger or equivalent solution to guarantee an immutable record and to allow external auditing.

WO 2019179734-A1 describes a solution that allows a device (e.g., loT device) to communicate into a communication network (e.g., data upload or download) after the authorization by a device (e.g., a mobile device) located in close proximity with each other. The authorizing device identifies the end-user operating it (through biometric data, password, or similar). The communication between the loT device and the user device takes place over a network, which is inherently less secure than by contact. Data transmitted by the loT device is not stored in a distributed ledger or equivalent solution to guarantee an immutable record and to allow external auditing.

US 20160241660-A1 includes a device emitting a beacon which is captured by a mobile device to authenticate it and certify its proximity, authorizing another device to perform an operation (e.g., opening a door). The user authentication is obtained through an emitted beacon by an isolated device, while in present invention the device is authenticated through the contact with a non-visible pattern of capacitive points on a surface. Data transmitted by the loT device is not stored in a distributed ledger or equivalent solution to guarantee an immutable record and to allow external auditing. The main scope of the described solution is to allow IFTTT scenarios with authentication of the operator, not the monitoring of remote devices, including its security and integrity, as well as the security, integrity, and immutability of data transmission for their measurement, as in present invention.

US 20190349426-A1 provides a solution in which loT devices are univocally identified by identifiers. The objects and their corresponding identifiers are organized in hierarchical structures. The identifiers are committed to a blockchain and a service is consulting this immutable record to gather if an identifier already exists, its eventual hierarchical structure, etc. The user operating the device and their authentication are never take into account in this solution. The data transmission from the device to a remote server is not signed, nor encrypted, and is not stored in a distributed ledger or equivalent solution to guarantee an immutable record and to allow external auditing.

US 10333929-B2 discloses a device that communicates with an loT device to perform some control/command. The communication is authorized by an authorizing device. Communication among the involved devices is encrypted. Data transmitted by the loT device is not stored in a distributed ledger or equivalent solution to guarantee an immutable record and to allow external auditing. Users are not involved in the process, nor are their identity verified in any way.

US 20180184290-A1 describes a solution to allow a device to communicate with an loT device, where the two parts are authenticated mutually; the communication is signed using a certificate, received in a secure manner from the manufacturer's server. Data transmitted by the loT device is not stored in a distributed ledger or equivalent solution to guarantee an immutable record and to allow external auditing. Users are not involved in the process, nor are their identity verified in any way.

### Description of the Invention

Present invention provides, according to a first aspect, a method for providing identity and authentication to a data-generation device. The method comprises including a beacon into a data-generation device; storing a unique pattern through a set of capacitive points included on a capacity surface of the beacon; storing a unique identifier code in a portable computing device of a user, the portable computing device having a capacitive screen; pairing the data-generation device with the portable computing device by means of reading said unique pattern via the capacitive screen of the portable computing device, providing a user-device pair as a result; associating the user-device pair with a digital certificate; encrypting data generated by the data-generation device using an encryption key specific to the user-device pair, the encryption key being stored in a security module of the beacon; and transmitting, by the beacon, the encrypted data to a server and/or to a distributed ledger.

It should be noted that in other embodiments, depending on the desired security level, instead of the user-device pair, the certificate can be associated only to the device for any operation by any user, or be associated only to the device for standard operation, requesting a certificate also associated to the operating user for specific operation (e.g., first activation, or critical operations.).

In an embodiment, the encrypting step is performed by an encryption module of the beacon.

In an embodiment, at least the digital certificate is protected against tampering by the security module incorporating one or more protection mechanisms, which can be configured to have different protection levels.

In an embodiment, the transmitting step is periodically performed. Alternatively, the transmitting step is performed upon request of a user.

In an embodiment, the data comprises a measurement made by the data-generation device, location information of the data-generation device and/or a working and/or physical condition of data-generation device.

The present invention also provides, according to another aspect, a data-generation device comprising a beacon. The beacon includes a capacitive surface adapted to store a unique pattern through a set of capacitive points; a security module adapted to store an encryption key; a communication module; and a controller operatively connected to the connection module, security module and capacitive surface, the controller storing or having associated a digital certificate.

After the unique pattern is read by means of a portable computing device having a capacity screen, the controller is adapted to pair the data generation device with the portable computing device, providing a user-device pair as a result; associate the user-device pair with the digital certificate; encrypt data generated by the data-generation device using said encryption key; and transmit the encrypted data to a server and/or to a distributed ledger.

The data-generation device can be an engine, a sensor, a valve, a drone, an electric charger, etc.

In an embodiment, the beacon further comprises one or more programmable connectors.

In an embodiment, the beacon also has a positioning module configured to track data-generation device's movements and to determine its location.

In an embodiment, the beacon also has an anti-tampering module that incorporates one or more protection mechanisms to prevent compromise of at least said digital certificate.

In an embodiment, the beacon also has sensors for measuring, or other hardware to generate own measuring, e.g., accelerometers, hit detectors, thermometer, etc. both to generate data of use for the end-user/service and/or to detect tampering and/or improper usage.

In an embodiment, the beacon also has an encryption module to perform said encryption of the data generated by the data-generation device.

Particularly, the set of capacitive points is invisible to human inspection.

Hence, the present invention solution includes a beacon (i.e. a HW and/or SW module/unit) which can be integrated in any data-generation device and environment, guarantying: end-to-end encryption with an own certificate; client to server information collection; client to Distributed Ledger (DLT) information publication for audition (if needed), keeping information control; physical possession testing of the data-generation device, requestable at any time to control device operators, intervention auditing, etc.; and real-time certificate association to the specific user operating the data-generation device at a given time.

The present invention assures that:
- data coming from the data-generation devices is signed (by the data-generation device or by the device/user pair, if relevant) and cyphered;
- data-generation devices may authenticate into the network;
- data transmitted by a data-generation device may be monitored and audited externally;
- data collection is resilient thanks to the distributed ledger collecting it. This allows to guarantee data quality and integrity;
- data-generation devices may be monitored (location, operations, etc.), being sure of their integrity and identity;
- communication and data transmission between the device and the central server is secure.

### Brief Description of the Drawings

The previous and other advantages and features will be more fully understood from the following detailed description of embodiments, with reference to the attached figures, which must be considered in an illustrative and non-limiting manner, in which:
Fig. 1 schematically illustrates the architecture implementing the proposed solution for providing identity and authentication to a data-generation device.
Fig. 2 is a flow chart illustrating the first operation of an operator on the beacon, with certificate request.

### Detailed Description of Preferred Embodiments

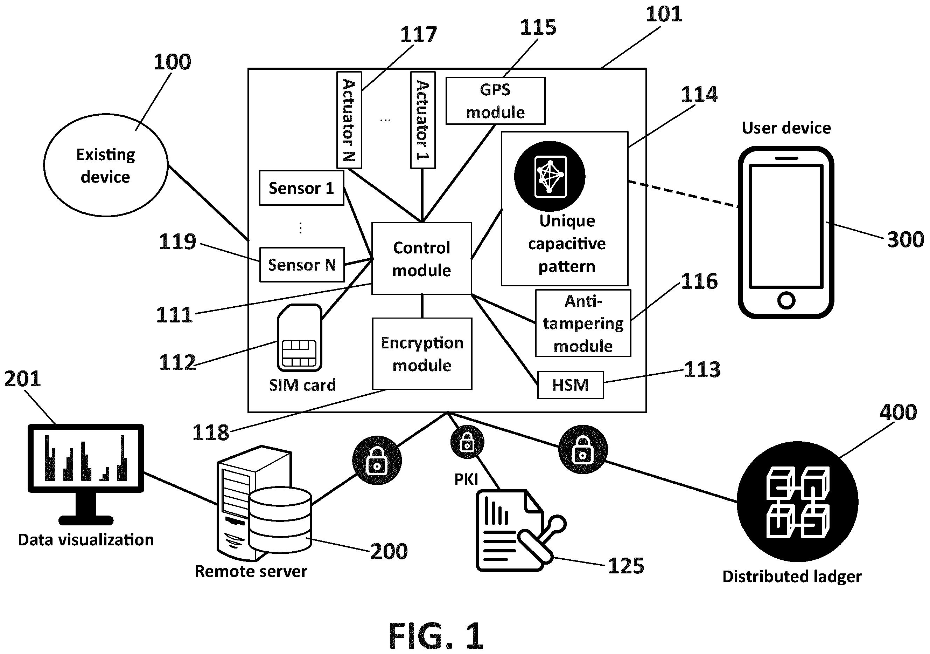

Fig. 1 shows an embodiment of the proposed architecture of the invention for providing identity and authentication to a data-generation device 100, particularly those that perform critical operations and that must be monitored in detail (e.g., electric charger, shared vehicle, energy production system, device needing periodic revision, Operational Technology (OT) devices, drones, an engine, etc.). By including a beacon 101 in or attached to the data-generation device 100 the present invention allows providing the device 100 with a unique identity. The identity provided is robust, in order to guarantee that the transmission of the data generated by the data-generation device 100 is secure. The transmission will use end-to-end encryption with an owned certificate 125, which may be issued on the fly by a trusted PKI and associated to the pair device-user(s) operating it.

The transmitted data can be fed to a server 200, as usual, but can be also published encrypted in a distributed ledger 400 so that it may be audited (if needed), leaving the control on the information to its owner, and assuring data quality and integrity.

The present invention can be included in any existing environment in a very simple way, as the beacon 101 incorporates all the mechanisms to make the connection between the data-generation device 100 and a control console 201. As such, intelligence can be added to any data-generation device 100 able to generate data.

Referring back to Fig. 1, the beacon 101, which can be considered as a closed box/module having HW and/or SW functionalities), includes a plurality of modules/units controlled by a controller module 111. In particular, in the embodiment of Fig. 1, the beacon 101 includes a communications module 112 to provide network connectivity (e.g., through a GSM module or a SIM card integrated in the beacon 101 itself). The beacon 101 can also have a positioning module 115, allowing knowing at anytime the location of the attached data-generation device 100, if needed.

The beacon 101 also includes a capacitive surface 114 including a unique pattern (e.g., a set of invisible capacitive points embedded on the beacon surface, representing a unique pattern), on which a capacitive screen of a mobile device 300 can be placed to read the unique pattern and, together with a unique identifier code contained in the mobile device 300 itself, form a unique identified pair device-user (operator). The pattern can be included during the beacon 101 making and, preferably, cannot be edited after. The pattern includes a number of points limited by the minimum among maximum number of readable points by the capacitive screen. The pattern can include points of size and at reciprocal distance compatible with the capacitive screen. As the position of the mobile device 300 is not taken into account in the placing and pairing process just described, two patterns where one is a rotation of another may not be included in different beacons 101, as they actually represent the same pattern.

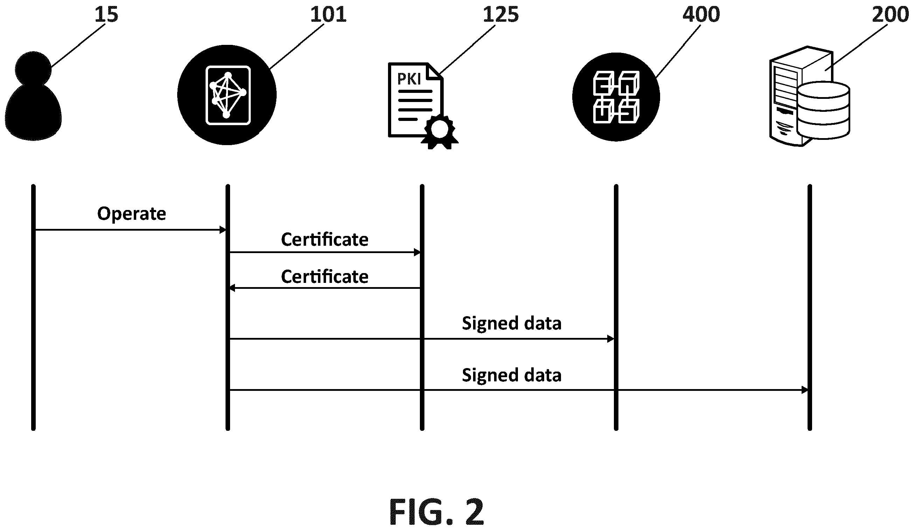

The unique user-device pair will then be associated to a unique digital certificate 125 for data encryption via an encryption module 118. If it is the first time the user-device pair operates together, a digital certificate 125 will be asked to the PKI to be associated to that pair, as depicted in Fig. 2, otherwise, the digital certificate 125 will already be in the beacon 101, for example stored in the controller module 111, and used for the operation.

The beacon 101 also includes a security module 113, for example a Hardware Security Module (HSM), to store the encryption key specific to the paired existing device, allowing its univocal identification, as well as encrypted data transmission. The certified is emitted when the beacon 101 is first paired with the data-generation device 100, once per each paired device (for instance, in case of a rented electric vehicle, for each new user using it, a digital certificate 125 is emitted and stored in the security module 113 of the vehicle). The PKI can then delete each individual digital certificate 125 if needed. At the same time, the beacon 101 can have stored a digital certificate 125, included when it was configured, to sign operations that are not made by a specific user/operator 15 (or when the user/operator 15 executing the operation may be not relevant).

The beacon 101 is configured to communicate with sensors 119, (programmable) actuators, 117, registries, etc. via different connectors, depending on the specific needs of the scenario. In some embodiments, the beacon 101 can also be configured to act through the programmable actuators 117 (e.g., to open/close a door, to open/close a switch, etc.). Similarly to what happens with the sensors 119, the use of the actuators 117 by the beacon 101 can be configured to leave track in the blockchain and can be monitored, as well as externally audited.

The beacon 101 allows the administrator 15 of the data-generation device 100 set to:
- Test the possession of a device 100 (i.e., request a measurement with an associated device-user pair);
- Test the geographical positioning of a device 100 (this may be done using a GPR system, or triangulation of GSM antennas, for instance, or using both to verify that GPS Spoofing or similar attacks are not in use);
- Audit the measurements of a device 100 on a distributed ledger 400;

All the operations will be done guaranteeing the end-to-end encryption of the data generated.

The beacon 101 particularly also includes an anti-tampering module 116. Hence, the beacon 101, as well as the security module 113 it contains, can be protected against tampering by different mechanisms. In particular, when a tampering attempt is detected, (i) a specific signal is sent to the central control service, and (ii) all the sensitive content (encryption keys, identifiers, etc.) is destroyed. The different protection mechanisms can have or can be configured to have different security levels.

The beacon 101 can be configured to periodically transmit telemetric data of the paired existing device 100, including sensor measurements, location, or anything else needed in the specific case, allowing a real-time monitoring of the data-generation device 100. The data may be signed by the beacon 101 before transmission using the owned digital certificate 125 and/or encrypted using the specific key.

Being the beacon 101 the entity sending data to the distributed ledger 400 and/or to the central system (i.e., remote server) 200, present invention allows the "smarted" data-generation device 100 to signal by itself eventual anomalous measurements, e.g., a drone flying over a restricted area, or a shared vehicle not respecting the regulation or agreements, or an electricity production unit working in anomalous conditions, etc.

The present disclosure and/or some other examples have been described in the above. According to descriptions above, various alterations may be achieved. The topic of the present disclosure may be achieved in various forms and embodiments. All applications, modifications and alterations required to be protected in the claims may be within the protection scope of the present disclosure.

The scope of the present invention is defined in the following set of claims.

## Claims

1. A method for providing identity and authentication to a data-generation device, the method comprising:
including a beacon (101) into a data-generation device (100);
storing a unique pattern through a set of capacitive points included on a capacity surface (114) of the beacon (101);
storing a unique identifier code in a portable computing device (300) having a capacitive screen;
pairing the data-generation device (100) with the portable computing device (300) by means of reading said unique pattern via the capacitive screen of the portable computing device (300), providing a user-device pair as a result;
associating the user-device pair with a digital certificate (125);
encrypting data generated by the data-generation device (100) using an encryption key specific to the user-device pair, the encryption key being stored in a security module (113) of the beacon (101); and
transmitting, by the beacon (101), the encrypted data to a server (200) and/or to a distributed ledger (400).

2. The method of claim 1, wherein the encrypting is performed by an encryption module (118) of the beacon (101).

3. The method of claim 1 or 2, wherein at least the digital certificate is protected against tampering by the security module (113) incorporating one or more protection mechanisms.

4. The method of any of the previous claims, wherein said transmitting step is periodically performed.

5. The method of any of the previous claims, wherein the data comprises a measurement made by the data-generation device (100), location information of the data-generation device (100) and/or a working and/or physical condition of data-generation device (100).

6. A data-generation device, comprising a beacon (101) that includes:
a capacitive surface (114) configured to store a unique pattern through a set of capacitive points;
a security module (113) configured to store an encryption key;
a communication module (112); and
a controller (111) operatively connected to the connection module (112), security module (113) and capacitive surface (114), the controller (111) storing or having associated a digital certificate (125);
whereby, after the unique pattern is read by means of a portable computing device (300) having a capacity screen, the controller (111) is configured to:
pair the data generation device (100) with the portable computing device (300), providing a user-device pair as a result;
associate the user-device pair with the digital certificate (125);
encrypt data generated by the data-generation device (100) using said encryption key; and
transmit the encrypted data to a server (200) and/or to a distributed ledger (400).

7. The device of claim 6, wherein the beacon (101) further comprises one or more programmable connectors.

8. The device of claim 6 or 7, wherein the beacon (101) further comprises a positioning module (115) configured to track data-generation device's movements and to determine its location.

9. The device of any one of previous claims 6 to 8, wherein the beacon (101) further comprises an anti-tampering module (116) that incorporates one or more protection mechanisms to prevent compromise of at least said digital certificate.

10. The device of any one of previous claims 6 to 9, wherein the beacon (101) further comprises an encryption module (118) to perform said encryption of the data generated by the data-generation device (100).

11. The device of any one of previous claims 6 to 10, wherein the set of capacitive points is invisible to human inspection.

12. The device of any of previous claims 6 to 11, wherein the data-generation device (100) comprises an engine, a sensor, a valve, an electric charger, a shared vehicle, an energy production system, an Operational Technology device or a drone.
